# EUROPÄISCHE PATENTANMELDUNG

(11) **EP 4 155 131 A1**
(43) Veröffentlichungstag der Anmeldung: **29.03.2023**
(21) Anmeldenummer: 21198648.4
(22) Anmeldetag: 23.09.2021
(51) Int. Cl.: B60R 9/06, B60P 3/11

(54) **FAHRZEUG, SYSTEM UND VERFAHREN**

(71) Anmelder: Blue Technologies BV, 4387 PK Vlissingen (NL)
(72) Erfinder: BENNER, Moritz, 61273 Wehrheim (DE)
(74) Vertreter: Wunderlich & Heim Patentanwälte Partnerschaftsgesellschaft mbB

(57) **Zusammenfassung**

Die Erfindung betrifft ein Fahrzeug (1), insbesondere Automobil, mit einem Fahrzeugkörper (2), einem Aufbewahrungsraum (3) im Fahrzeugkörper (2) mit einer Öffnung an einer Außenseite des Fahrzeugkörpers (2) mit mindestens einem, insbesondere witterungsabdichtbaren, Deckel (4) und einem Schließ- und Verriegelungsmechanismus (7) am Deckel (4) zum Öffnen und Schließen des Aufbewahrungsraums (3). Der Aufbewahrungsraum (3) mit der verschließbaren Öffnung ist zum Starten und Landen eines fahrerlosen, fernsteuerbaren Kleinflugzeuges (9), insbesondere einer Drohne, ausgebildet.

## Beschreibung

Die Erfindung betrifft ein Fahrzeug, insbesondere Automobil, mit einem Fahrzeugkörper, einem Aufbewahrungsraum im Fahrzeugkörper mit einer Öffnung an einer Außenseite des Fahrzeugkörpers mit mindestens einem, insbesondere witterungsabdichtbaren, Deckel und einem Schließ- und Verriegelungsmechanismus am Deckel zum Öffnen und Schließen des Aufbewahrungsraums, gemäß dem Oberbegriff des Anspruch 1. Ferner betrifft die Erfindung ein System nach Anspruch 8 und ein Verfahren zum Betreiben des Systems nach Anspruch 15.

Fahrzeuge, insbesondere Rennfahrzeuge in Form von Booten und insbesondere Kraftfahrzeugen als Automobile sind bekannt. Es sind Rennfahrzeuge bekannt, die ausschließlich oder insbesondere auf nicht öffentlichen Verkehrsstraßen, d.h. auf privaten, oder öffentlich gesperrten Rennstrecken mit einer Kreisführung betrieben werden.

Kraftfahrzeuge mit einem Aufbewahrungsraum mit einer horizontalen Öffnung und einem Verschlussdeckel sind bekannt, um Fahrzeugabdeckungen fest oder mittels Textilanteilen für einen Cabrio-Betrieb unterzubringen.

Für ein sicheres Fahren insbesondere bei höheren Geschwindigkeiten ist es vorteilhaft, einen möglichst weit vorausschauenden Überblick über eine Fahrstrecke und/oder über die Umgebung eines Fahrzeuges zu haben. Dies ist bei kurvenreichen und/oder bergigen Fahrstrecken häufig kaum möglich.

Der Erfindung liegt die **Aufgabe** zugrunde, ein Fahrzeug, ein System und ein Verfahren anzugeben, um einen möglichst sicheren Betrieb eines Fahrzeugs zu ermöglichen.

Nach der Erfindung wird diese Aufgabe durch ein Fahrzeug mit dem Merkmal des Anspruchs 1 gelöst. Bevorzugte Ausführungsformen der Erfindung sind in den abhängigen Ansprüchen angegeben.

Das erfindungsgemäße Fahrzeug ist dadurch gekennzeichnet, dass der Aufbewahrungsraum mit der Öffnung zum Starten und Landen eines fahrerlosen Kleinflugzeuges ausgebildet ist. Funkgesteuerte, fahrerlose Kleinluftfahrzeuge, d.h. Kleinflugzeuge, insbesondere Drohnen, sind grundsätzlich bekannt. Die Drohnen können eine Kamera mit Bildübertragung umfassen. Es sind insbesondere elektrisch betriebene Kleinflugzeuge vorgesehen, die vertikal starten und landen können, sogenannte eVTOLs. Das Kleinflugzeug ist insbesondere eine Drohne, bevorzugt mit mehreren, insbesondere vier Rotoren zum vertikalen Starten und Landen sowie zum Fortbewegen im Raum.

Ein Grundgedanke der Erfindung kann darin gesehen werden, durch einen Aufbewahrungsraum für ein Kleinflugzeug jederzeit die Möglichkeit zu schaffen, Außenbildaufnahmen einer Fahrstrecke und/oder einer Umgebung des Fahrzeugs insbesondere während des Fahrbetriebs eines Fahrzeugs zu realisieren. Es gibt einen Kleinflugzeug-Aufbewahrungsraum im Fahrzeug, in dem das Kleinflugzeug sicher aufbewahrt und mitgeführt werden kann. Über eine verschließbare Öffnung kann das Kleinflugzeug direkt auf dem Aufbewahrungsraum starten und darin landen.

Auch beim Betrieb von Rennsportfahrzeugen besteht das Bedürfnis sowohl bei Zuschauern als auch bei den Fahrern selbst während und/oder nach der Fahrt, die außergewöhnliche, besondere Fahrt, die Rennfahrt, als eine Videoaufzeichnung aus der Luft zu verfolgen und gegebenenfalls später zu analysieren. Insbesondere mit Sportfahrzeugen der sogenannten Hypercar-Klasse besteht hier ein gesteigertes Bedürfnis, etwa um Fehler zu erkennen und Verbesserungen vorzunehmen.

Gemäß einer bevorzugten Ausführungsform ist in dem Aufbewahrungsraum eine Akkumulator-Ladevorrichtung zum Laden eines Akkumulators des Kleinflugzeuges vorgesehen. Somit kann der Akku des Kleinflugzeugs jederzeit leicht geladen werden, sodass die Verfügbarkeit erhöht ist. Es versteht sich, dass die Ladevorrichtung einen Stecker und/oder für einen induktiven Ladevorgang eine induktive Ladeeinrichtung umfassen kann. Damit ist ein automatisches Laden realisierbar. Eine gewisse Toleranz in der Lagerung des Kleinflugzeugs ist möglich.

Damit das Kleinflugzeug eine sichere Lagerung im Aufbewahrungsraum vor allem während der Fahrt des Fahrzeugs hat, ist, insbesondere in einer X-Y-Ebene, bevorzugt im X-Y-Z-Raum eine Halterung für das Kleinflugzeug vorgesehen. Diese ist vorzugsweise kraft- und/oder formschlüssig und kann vorzugsweise an Kufen des Kleinflugzeugs angreifen.

Gemäß einer weiterbildenden Ausführungsform ist die Halterung mechanisch und oder elektronisch mit dem Verriegelungsmechanismus des Deckels koppelbar ist und weist einen Verriegelungs- bzw. Entriegelungsmechanismus auf. Die Halterung entriegelt somit das Kleinflugzeug in Kombination mit der Entriegelung des Deckels und umgekehrt.

Grundsätzlich wäre es möglich, den Aufbewahrungsraum im Fahrzeugkörper vor einer Sitzanordnung für den Fahrer oder am Fahrzeugdach vorzusehen. Um dem Fahrer jederzeit, auch vor Fahrtbeginn eine freie Sicht zu ermöglichen, sowie aus Gründen eines Bedürfnisses nach ausreichendem Stauraum ist bevorzugt, der Aufbewahrungsraum im Fahrzeugkörper hinter einer Sitzanordnung für Fahrer und, insbesondere für Mitfahrer, angeordnet.

Es versteht sich, dass der Schließ- und Verriegelungsmechanismus des Deckels grundsätzlich manuell rein mechanisch, beispielsweise mittels eines Seilzugsystems realisierbar ist. Um ein Fahrzeug und System mit einem sehr hohen, komfortablen Automatisierungsgrad zu schaffen, ist der Schließ- und Verriegelungsmechanismus elektrisch ansteuerbar ist.

Der Deckel zum Öffnen und Schließen der horizontalen Öffnung kann sich translatorisch öffnen lassen, etwa ähnlich einem Schiebedach. Aus Gründen eines ressourcenschonenden Bauraums ist bevorzugt der Deckel aus zwei rotatorisch, aufklappbare Hälften ausgebildet. Die Deckelhälften schließen bevorzugt form- und kraftschlüssig, um den Aufbewahrungsraum vor Witterungseinflüssen, wie Regen und Schnee, sowie erhöhte Feuchtigkeit zu schützen.

Es wird ferner ein erfindungsgemäßes System beschrieben, umfassend ein mit den Merkmalen oben beschriebenes Fahrzeug und ein Kleinflugzeug mit Steuerung, wobei das Kleinflugzeug mit einer Kamera mit vorzugsweise mehrachsiger Ansteuerung und Lagerung ausgebildet ist und mit einem Filmdatenspeicher im Kleinflugzeug und/oder einer Sendevorrichtung zur direkten Bilddatenübertragung an die Fernsteuerung bzw. an eine separate Bildempfangsvorrichtung. Die technischen Elemente sowohl zur Speicherung als auch zur kabellosen Bildübertragung sind als Modul-Bauteile heute kommerziell zu günstigen Konditionen verfügbar und sehr oft Bauteile von herkömmlichen Smartphones. Auch Smartphones können diese Funktionen übernehmen oder aufweisen. Die Kameraansteuerung kann automatisch und/oder manuell von dem Fahrer oder einer anderen Person, etwa einem Beifahrer, erfolgen.

Gemäß einer einfachen Ausführungsform ist der Schließ- und Verriegelungsmechanismus des Deckels durch eine eigene Deckelöffnungssteuerung realisierbar. Gemäß einer weiter bevorzugten Ausführungsform, um den Automatisierungsgrad zu erhöhen und den Komfort zu steigern, ist der Schließ- und Verriegelungsmechanismus des Deckels mit einer Steuerung des Kleinflugzeugs koppelbar ausgebildet ist.

Ein Gedanke ist, die Fernsteuerung des Kleinflugzeugs löst zum Starten des Kleinflugzeugs den Schließ- und Verriegelungsmechanismus des Deckels aus, so dass der Deckel oder Deckelhälften sich öffnen. Der Deckel kann optional während des Betriebs des Flugzeugs und während des Betriebs des Fahrzeugs wieder geschlossen werden. Zum Landen bzw. zum Ende des Flugzeugsbetriebs, das beispielsweise durch eine geringe elektrische Batterieladung erzwungen wird, kann der Deckel wieder geöffnet werden und nach der sicheren horizontalen Landung wieder automatisch verschlossen werden, insbesondere auf Impuls und Datennachrichten der Fernsteuerung des Kleinflugzeugs. Das Starten und Landen kann bei langsamer Fahrt oder vorzugsweise bei Stillstand des Fahrzeugs erfolgen. Insbesondere das Starten und Landen mit dem Öffnen und Schließen kann vollständig oder teilweise automatisch durch eine Steuerung durchgeführt werden Um das System noch besser zu automatisieren, ist das Kleinflugzeug mit einer Fernsteuerung mit einer Nachfolgesteuerung bezüglich eines Objekts, einer sogenannten Follow-me, Funktion ausgebildet ist, die auf Basis einer optischen und/oder funkwellenbasierten Folgesteuerung ausgebildet. Somit können automatisch Nahbildaufnahmen vom Fahrzeug auch während der Fahrt durchgeführt werden. Die Steuerung des Kleinflugzeugs kann autonom, durch die Fahrzeugsteuerung oder eine Kombination von beiden erfolgen. Es versteht sich, dass die Nachfolgesteuerung umfasst, dass das Kleinflugzeug in der Ausbildung einer Drohne dem Fahrzeug sowohl hinterher fliegen als auch voraus, als auch links oder rechts parallel oder seitlich versetzt fliegen kann, je nachdem was für Aufnahmen gewünscht sind. Bei Geschwindigkeiten des Fahrzeugs über ca. 80 km/h können Filmaufnahmen mit Kleinflugzeugen, sogenannten eVTOL erreicht werden.

Gemäß einer weiterbildenden Ausführungsform ist die Fernsteuerung mit einer Flugzeugnavigationssteuerung, insbesondere mit einem Fahrzeug-Navigationsgerät, koppelbar. Die Flugzeugnavigationssteuerung umfasst entweder eigene Navigationsdaten zum Beispiel mittels des GPS-Satellitensystems oder gleicht diese mit dem Fahrzeug-Navigationsgerät ab. Es können somit in der Flugzeugnavigationssteuerung geographische Gebiete für den Flugbetrieb exklusiv erlaubt definiert werden und umgekehrt geografische Gebiete für einen Flugbetrieb verboten definiert werden. Beispielsweise könnte gemäß einem ersten Flugbetriebsmodus, ein Flug mit dem Kleinflugzeug nur definiert erlaubt sein, wenn die Fahrstrecke des Fahrzeugs im Fahrzeug-Navigationsgerät festgelegt wurde und diese auch eingehalten wird.

Um mehrere Kleinflugzeuge mit Fahrzeugen parallel auf einem geschlossenen Straßenring zu betreiben, weisen bevorzugt die Fernsteuerung mit dem Kleinflugzeug jeweils eine eindeutig identifizierbare ID in der Funkkommunikation auf, sodass die Kommunikation zwischen einem definiertem Paar auf Fernsteuerung und Kleinflugzeug sicher gegenüber fremden Funksteuer- und Übertragungssignal ist.

Eine weitere bevorzugte Ausführungsform der Erfindung besteht darin, dass an dem Kleinflugzeug eine Flugroute vorgebbar ist, welche insbesondere von einer geplanten Fahrstrecke des Fahrzeugs abhängig ist. Insbesondere bei bekannten Fahrstrecken, insbesondere ringförmigen Rennstrecken, kann es für ein effizientes Verfolgen oder Vorausfliegen zu dem Fahrzeug vorteilhaft sein, dass hierzu dem Kleinflugzeug die Flugroute durch Übertragung eines Datensatzes in die Flugsteuerung vorgegeben wird. Die Flugroute kann nicht nur dem Verlauf der Strecke entsprechen, sondern auch Luftlinienverbindungen zu besonders bevorzugten Beobachtungspunkten für das Kleinflugzeug umfassen. So können etwa Abkürzungen an Haarnadelkurven vorgesehen werden. Auch können an der Flugroute einzelne Punkte oder Bereiche vorgesehen sein, in welchen das Kleinflugzeug relativ zum Boden steht oder sich langsamer bewegt. Dies erlaubt, etwa bei besonders interessanten Streckenabschnitten gezielte Aufnahmen aus vorgegebenen Blickwinkeln zu erstellen. Die Aufnahmen können von dem Kleinflugzeug erst nach dem Landen zur Ansicht übertragen werden oder vorzugsweise bereits während des Betriebs des Fahrzeugs. Bildaufnehmen können dabei unmittelbar dem Fahrer und/oder einer Zentrale oder interessierten Zuschauern zur unmittelbaren Ansicht übertragen werden.

Weiter bevorzugt umfasst das Kleinflugzeug ein Kollisionsverhinderungssystem, insbesondere mittels Ultraschallwellen und/oder ein optisches System etc.. Somit wird das Kleinflugzeug mit Kamera vor Beschädigungen im Flugbetrieb zusätzlich geschützt.

Gemäß einer die Erfindung weiterbilden Ausführungsform ist die Fernsteuerung mit einer Fahrzeuganzeigesteuerung bzw. mit der Fahrzeugsteuerung koppelbar. Eine Kopplung mit der Fahrzeuganzeigesteuerung bedeutet, dass der Betrieb des Kleinflugzeugs aktivierbar und deaktivierbar wäre, wenn die Fahrzeuganzeigesteuerung auch Sensorschalter mit umfasst. Es könnten auch aufgenommene Bilder von der Fahrzeuganzeigesteuerung direkt gezeigt werden.

Vorteile für eine Kopplung mit der Fahrzeugsteuerung sind, dass das Kleinflugzeug bei einer entsprechenden Definition immer in einem ausreichenden Modus betrieben wird, in dem es noch in den Aufbewahrungsraum rückholbar ist, d.h. das Fahrzeug wird automatisch abgebremst, bevor es den erreichbaren Radius der Fernsteuerung des Flugzeugs bzw. einen Radius der verfügbaren elektrischen Energie des Kleinflugzeugs für ein Erreichen des Fahrzeugs verlassen sollte.

Hier wird ein Verfahren zum Betreiben eines oben dargestellten Systems beschrieben, wobei der Deckel des Aufbewahrungsraums von der Fernsteuerung des Kleinflugfahrzeugs geöffnet wird.

Dazu wird gemäß einem Herstellungsverfahren zum Betreiben des oben beschriebenen Systems die Fernsteuerung des Kleinflugzeugs mit einer Deckelsteuerung des Schließund Verriegelungsmechanismus vom Deckel gekoppelt. Somit sind die Betätigungen vorteilhaft reduziert und automatisiert.

Um möglichst gute Nahaufnahmen in Realität aus möglichst vielen Perspektiven zu erhalten, wird das Fahrzeug während des Betriebs von dem Kleinflugzeug in einem geometrisch definierten Abstand voreinstellbar, insbesondere dahinter, links, rechts und/oder davor, mittels der Follow-me-Funktionseinrichtung begleitet. Insbesondere werden von der Kamera Bilder aufgenommen und gespeichert, insbesondere übertragen.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine schematische perspektivische Ansicht eines geöffneten Aufbewahrungsraums eines Automobils mit einer Drohne;
- Fig. 2: eine perspektivische Röntgenansicht eines Aufbewahrungsraums eines Automobils mit einer Drohne; und
- Fig. 3: ein Ablaufdiagramm eines Verfahrens zum Betreiben eines Systems.

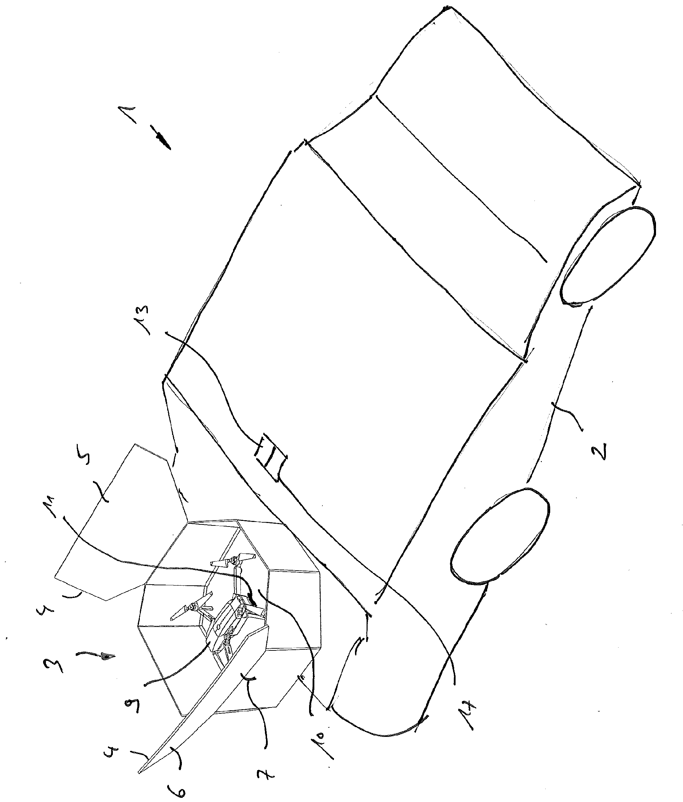

Die Fig. 1 zeigt eine perspektivische Ansicht eines radgebundenen Fahrzeugs 1 mit einem Fahrzeugkörper 2 und einem Aufbewahrungsraum 3. Das Fahrzeug 1 ist bevorzugt ein Sportfahrzeug, etwa ein sogenanntes Hypercar. Es kann auch jedes andere beliebige Fahrzeug sein, beispielsweise ein Wasserfahrzeug, wie ein Rennboot oder Segeljacht.

Der Aufbewahrungsraum 3 hat eine horizontale Öffnung an der Außenseite des Fahrzeugkörpers 2 mit einem witterungsabdichtbaren Deckel 4. Der Deckel 4 weist zwei aufklappbare Deckelhälften 5 und 6 auf. Der Aufbewahrungsraum 3 mit Gehäuse kann aufgesetzt oder vorzugsweise bündig in die Karosserie integriert sein.

Die Deckelhälften 5, 6 lassen sich vorzugsweise rotatorisch mit einer Rotationsachse aufklappen. Hierfür ist, in der Fig. 1 abstrakt dargestellt, ein Schließ- und Verriegelungsmechanismus 7 vorgesehen. Der Schließ- und Verriegelungsmechanismus 7 ist mittels einer Deckelsteuerung 8 aktivierbar.

Der Aufbewahrungsraum 3 ist für ein fernsteuerbares Kleinflugzeug 9, insbesondere eine Drohne ausgebildet. Das in der Fig. 1 gezeigte Kleinflugzeug 9 ist bevorzugt eine Drohne mit vier Rotoren. Für höhere Geschwindigkeiten zur Verfolgung für Nahbildaufnahmen des Fahrzeugs 1 kann das Kleinflugzeug 9 auch ein sogenannte eVTOL sein, das heißt ein herkömmliches fernsteuerbares Kleinflugzeug mit Senkrechtstart- und Lande-Funktionalitäten.

An der Unterseite des Kleinflugzeugs 9 ist eine, in der Fig. 1 nicht gezeigte, mehrachsige schwenk- und steuerbare Kamera zur Bildaufzeichnung angeordnet.

Ferner sind auf der Unterseite des Kleinflugzeuges 9 Kontakte zum Aufladen des Akkumulators als Ladevorrichtung 10 ausgebildet. Dabei wird ein Ladestrom entsprechend der benötigten Batteriespannung bereitgestellt. Es versteht sich, dass auch eine induktive Ladevorrichtung vorgesehen sein kann.

Das Kleinflugzeug 9 ist mit einer formschlüssigen Halterung 11 sicherbar. Die Halterung 11 ist mit dem Verriegelungsmechanismus 7 koppelbar. Das heißt mit einem Öffnen des Deckels 4 wird die Halterung 11 gelöst, so dass das Kleinflugzeug 9 starten und landen kann.

Der Aufbewahrungsraum 3 ist im Fahrzeugkörper 2 hinter einer Sitzanordnung für den Fahrer und Mitfahrer angeordnet. Die Deckelsteuerung 8 kann mechanisch über einen Seilzug z.B. mit Entriegelungshebel oder Schließhebel ausgebildet sein oder bevorzugt elektrisch mit einem elektrischen Betätigungsschalter der einen Servomotor aktiviert bzw. angesteuert sein.

Das Kleinflugzeug 9 wird von einer Fernsteuerung 13 angesteuert.

Eine separate Bildempfangsvorrichtung kann mit einer Fahrzeuganzeigesteuerung gekoppelt werden, sodass aufgenommene Bilder der Kamera, die in der Fig. 1 aus Gründen der Übersichtlichkeit nicht gezeigt ist, vom Kleinflugzeug 9 übertragen werden.

Je nach Betriebsmodus können die Bildaufnahmen der nicht gezeigten Kamera auch im Kleinflugzeug 9 abgespeichert werden und nach dem Betrieb des Kleinflugzeuges 9 über ein nicht dargestelltes Datenkabel bzw. kabellos ausgelesen oder übertragen werden.

Die Fernsteuerung 13 ist mit einer Flugzeugnavigationssteuerung 17 und der Fahrzeuganzeigesteuerung koppelbar. Die Fahrzeuganzeigesteuerung hat bevorzugt graphische Benutzerschnittstellen, die als sogenannte berührungsempfindliche Anzeigefläche mit als Schalter wirkenden Sensoren zur Bedienung ausgebildet sind. Solche sogenannte Touch-Displays mit einer sensitiven Oberfläche und einer dahinterliegenden Anzeigefläche sind bekannt.

Das Fahrzeug 1 umfasst ein Navigationssystem mit einem Navigationsgerät 16, in das das eine Fahrtroute zum Abfahren mittels des Fahrzeugs 1 eingebbar ist. Die Route ist bevorzugt eine private Rennstrecke, auf der es erlaubt ist, das Fahrzeug 1 in Begleitung eines Kleinflugzeugs 9 zu betreiben.

Die Fernsteuerung 13 umfasst also die Flugzeugnavigationsteuerung 17, die mit dem Fahrzeugnavigationsgerät koppelbar ist. Die Flugzeugnavigationssteuerung 17 prüft, ob ein Betrieb des Kleinflugzeugs 9 auf dem im Fahrzeugnavigationsgerät eingegebenen Fahrweg durchführbar ist, das heißt ob ein Betrieb des Kleinflugzeugs 9 erlaubt ist oder nicht.

Die Fernsteuerung 3 und das Kleinflugzeugs 9 haben eindeutig identifizierbare Kommunikationsident-Nummern (ID-Nummern) für die Funkkommunikation, sodass parallel in gleichen Frequenzbändern, z.B.2,4 GHZ oder 5 GHZ, mehrere Kleinflugzeuge betrieben werden können.

Somit ist ein geschlossenes, gesichertes System mit einem Fahrzeug 1 und einem Kleinflugzeug 9 hergestellt.

Die Fernsteuerung 13 des Kleinflugzeugs 9 wird vorteilhafterweise mit der Deckelsteuerung von dem Schließ- und Verriegelungsmechanismus 7 vom Deckel 4 gekoppelt, sodass bei Betätigung zum Start des Kleinflugzeugs 9 mittels der Fernsteuerung 13 automatisch der Deckel 4 geöffnet wird.

Es ist damit ein Betriebsverfahren des Systems geschaffen worden, um flexibel und einfach ein Kleinflugzeug 9 zu starten, um mit einer daran montierten Kamera Nahbildaufnahmen vom Fahrzeug während des Fahrbetriebs durchzuführen.

Das Kleinflugzeug 9 hat hierzu eine aus dem Stand der Technik bekannte Folgesteuerung bezüglich eines Objekts, hier dem Fahrzeug 1, die mit einer optischen oder auf Funkwellen-basierten Folgesteuerung ausgebildet ist.

Eine Fahrzeugsteuerung ist über die Fahrzeuganzeigesteuerung an die Fernsteuerung 13 gekoppelt, um gegebenenfalls die Reichweite zwischen Fahrzeug 1 und Kleinflugzeug 9 in einem technisch zulässigen Reichweitenverhältnis zu regeln.

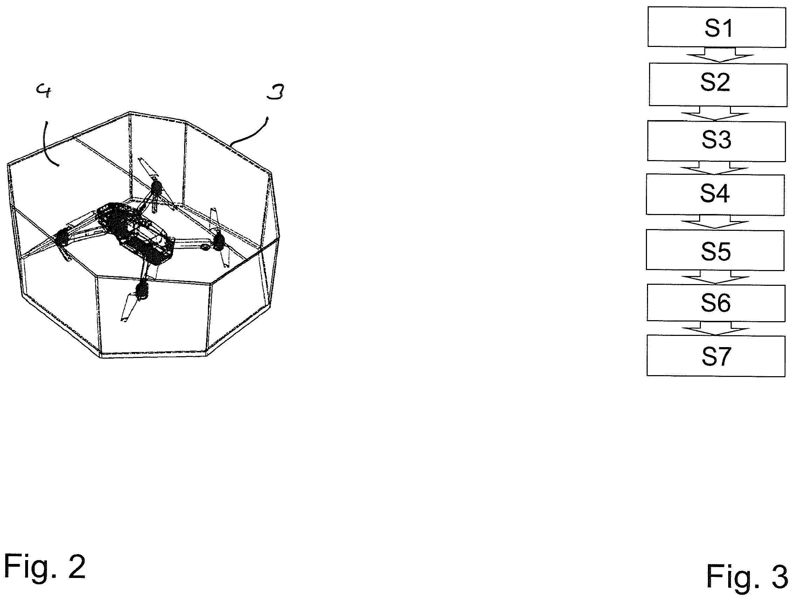

Die Fig. 2 zeigt eine perspektivische Röntgenansicht des Aufbewahrungsraums 3 mit geschlossenem Deckel 4 der Fig. 1. Der Aufbewahrungsraum 3 hat hier eine sechseckige Form in der Draufsicht. Es versteht sich, dass er jede andere Form, z.B. quadratisch, rechteckig, rund usw. aufweisen kann.

Die Fig.3 zeigt ein Ablaufdiagramm eines Verfahrens zum Betreiben eines oben beschriebenen Systems.

In einem ersten Schritt S1 zum Starten von Bildaufnahmen von hinten oder von vorne oder von einer der Seiten links oder rechts vom Fahrzeug 1 während des Betriebs des Fahrzeugs 1 wird die Fernsteuerung 13 betätigt. Die Fernsteuerung 13 kann auch in der Fahrzeuganzeigesteuerung mit einer graphischen Benutzerschnittstelle integriert sein.

Im zweiten Schritt S2 wird von der Flugzeugnavigationsteuerung durch Kopplung an das Fahrzeugnavigationsgerät geprüft, ob ein Flugbetrieb für den vorgesehen für die vorgesehene Route erlaubt ist.

Ist dies der Fall, so wird ein Flugbetrieb mit dem Kleinflugzeug 9 freigegeben.

Im Schritt S3 wird die Deckelsteuerung aktiviert, um den Schließ- und Verriegelungsmechanismus 7 zu betätigen und den Deckel 4 zu öffnen. Die Halterung 11 wird zusammen mit dem Schließ- und Verriegelungsmechanismus 7 geöffnet.

Im Schritt S4 wird das Kleinflugzeug 9 gestartet und eine Bildübertragung auf die Bildempfangsvorrichtung beginnt.

Im Schritt S5 folgt nun das Kleinflugzeug 9 dem Fahrzeug 1 entsprechend der Folgesteuerung oder einem vorher vorgegebenen Profil entweder hinter dem Fahrzeug, vor dem Fahrzeug oder neben dem Fahrzeug.

Es kann auch sein, dass das Kleinflugzeug 9 die Fahrtroute abkürzt und dem Fahrzeug entgegenfliegt, wenn die elektrische Batterieladung dazu ausreichend ist und das Fahrzeug sich zu schnell wegbewegt hat und das Kleinflugzeug 9 nicht mehr folgen konnte.

Der Schritt S6 läuft wie folgt ab: Sobald die elektrische Batterieladung eine gewisse Minimumschwelle unterschritten hat, wird dies über die Fernsteuerung 13 der Fahrzeuganzeigesteuerung mitgeteilt, die mit Fahrzeugsteuerung 20 koppelbar ist. Die Fahrzeugsteuerung 20 regelt zusammen mit von der Fernsteuerung 13 den Abstand zwischen den beiden Objekten. Hierfür überwacht die Fernsteuerung 13, den Abstand zwischen dem Kleinflugzeug 9 und Fahrzeug 1, dass dieser ausreichend klein gehalten wird, sodass genügend Energie im Kleinflugzeug 9 vorhanden ist, um wieder im Aufbewahrungsraum 3 sicher zu landen. Gegebenenfalls bremst die Fahrzeugsteuerung das Fahrzeug 1 angewiesen von der Fernsteuerung 13 ab.

Im Schritt S7 ist das Kleinflugzeug 7 aufgrund niedriger Batterieladung im Aufbewahrungsraum 3 wieder automatisch gelandet und mit elektrischen Kontakten als Ladevorrichtung 10 oder einer induktiven Ladevorrichtung verbunden. Die Halterung 11 befestigt das Kleinflugzeug 9 wieder formschlüssig im Aufbewahrungsraum 3 und die beiden Deckelhälften 5, 6 werden mittels des Schließ- und Verriegelungsmechanismus 7 wieder geschlossen.

Somit ist ein Fahrzeug 1, ein System und Verfahren zum Betreiben und Herstellen geschaffen, um vollautomatisch Nahbildaufnahmen, insbesondere von Rennfahrzeugen im Betrieb flexibel vorzunehmen.

## Patentansprüche

1. Fahrzeug (1), insbesondere Automobil, mit
- einem Fahrzeugkörper (2),
- einem Aufbewahrungsraum (3) im Fahrzeugkörper (2) mit einer horizontalen Öffnung an einer Außenseite des Fahrzeugkörpers (2) mit mindestens einem, insbesondere witterungsabdichtbaren, Deckel (4), und
- einem Schließ- und Verriegelungsmechanismus (7) am Deckel (4) zum Öffnen und Schließen des Aufbewahrungsraums (3),
- **dadurch gekennzeichnet,**
- **dass** der Aufbewahrungsraum (3) mit der verschließbaren Öffnung zum Starten und Landen eines fahrerlosen Kleinflugzeuges (9), insbesondere einer Drohne, ausgebildet ist.

2. Fahrzeug (1) nach Anspruch 1,
**dadurch gekennzeichnet,**
**dass** in den Aufbewahrungsraum (3) eine Akkumulator-Ladevorrichtung (10) zum Laden eines Akkumulators des Kleinflugzeuges (9) vorgesehen ist.

3. Fahrzeug (1) nach Anspruch 1 oder 2,
**dadurch gekennzeichnet,**
**dass** in dem Aufbewahrungsraum (3) eine Halterung (11) für das Kleinflugzeug (9) vorgesehen ist, die insbesondere mit dem Verriegelungsmechanismus des Deckels koppelbar ist.

4. Fahrzeug (1) nach einem der Ansprüche 1 bis 3,
**dadurch gekennzeichnet,**
**dass** der Aufbewahrungsraum im Fahrzeugkörper hinter einer Sitzanordnung für Fahrer und, insbesondere für Mitfahrer, angeordnet ist.

5. Fahrzeug nach einem der Ansprüche 1 bis 4,
**dadurch gekennzeichnet,**
**dass** der Schließ- und Verriegelungsmechanismus (7) des Deckels von der Deckelsteuerung elektrisch ansteuerbar ist.

6. Fahrzeug nach einem der Ansprüche 1 bis 5,
**dadurch gekennzeichnet,**
**dass** der Schließ- und Verriegelungsmechanismus (7) mit einer Steuerung (13) des Kleinflugzeugs koppelbar ausgebildet ist,

7. Fahrzeug nach einem der Ansprüche 1 bis 6,
**dadurch gekennzeichnet,**
**dass** der Deckel (4) zwei rotatorisch aufklappbare Hälften (5, 6) umfasst.

8. System mit einem Fahrzeug (1) nach einem der Ansprüche 1 bis 7 und mit einem Kleinflugzeug (9) mit Fernsteuerung (11),
**dadurch gekennzeichnet,**
**dass** das Kleinflugzeug (9) mit einer Kamera mit mehrachsiger Ansteuerung ausgebildet ist und mit einer Speichermöglichkeit am Kleinflugzeug und/oder direkten Bilddatenübertragung an eine Fernsteuerung bzw. separate Bildempfangsvorrichtung (14).

9. System nach Anspruch 8,
**dadurch gekennzeichnet,**
**dass** das Kleinflugzeug (9) mit einer Fernsteuerung mit einer Folgefunktion zum Folgen eines Objekts, insbesondere des Fahrzeuges (1), ausgebildet ist.

10. System nach Anspruch 9,
**dadurch gekennzeichnet,**
**dass** die Fernsteuerung mit einer Flugzeugnavigationssteuerung (17) an ein Fahrzeugnavigationsgerät (16) koppelbar ist.

11. System nach einem der Ansprüche 8 bis 10,
**dadurch gekennzeichnet,**
**dass** an dem Kleinflugzeug (9) eine Flugroute vorgebbar ist, welche insbesondere von einer geplanten Fahrstrecke des Fahrzeugs (1) abhängig ist.

12. System nach einem der Ansprüche 8 bis 11,
**dadurch gekennzeichnet,**
**dass** die Fernsteuerung (13) mit dem Kleinflugzeug (9) eine eindeutig identifizierbare ID-Nummer in einer Funkkommunikation aufweist.

13. System nach einem der Ansprüche 8 bis 12,
**dadurch gekennzeichnet,**
**dass** das Kleinflugzeug (9) eine Kollisionsverhinderungssystem, insbesondere mittels Ultraschallwellen etc. umfasst.

14. Verfahren zum Herstellen eines Systems nach einem der Ansprüche 8 bis 13, **dadurch gekennzeichnet,**
**dass** die Fernsteuerung (13) des Kleinflugzeugs mit einer Deckelsteuerung des Schließ- und Verriegelungsmechanismus (7) vom Deckel (4) gekoppelt wird.

15. Verfahren zum Betreiben eines Systems nach einem der Ansprüche 8 bis 14,
**dadurch gekennzeichnet,**
**dass** ein Kleinflugzeug (8) aus dem Aufbewahrungsraum (3) des Fahrzeuges (1) startet und/oder darin landet.
